# EUROPÄISCHE PATENTSCHRIFT

(11) **EP 3 957 033 B1**
(45) Veröffentlichungstag und Bekanntmachung des Hinweises auf die Patenterteilung: **10.04.2024**
(21) Anmeldenummer: 20728964.6
(22) Anmeldetag: 12.05.2020
(51) Int. Cl.: H04L 12/40, H04L 9/40

(54) **RECHENANLAGE UND VERFAHREN ZUM BETREIBEN EINER RECHENANLAGE**
COMPUTING SYSTEM AND METHOD FOR OPERATING A COMPUTING SYSTEM
CALCULATEUR ET PROCÉDÉ POUR FAIRE FONCTIONNER UN CALCULATEUR

(30) Priorität: 14.06.2019 DE 102019208710
(43) Veröffentlichungstag der Anmeldung: 23.02.2022
(73) Patentinhaber: Siemens Mobility GmbH, 81739 München (DE)
(72) Erfinder: AUST, Frank, 38239 Salzgitter (DE); SEIFERT, Matthias, 21244 Buchholz (DE)
(74) Vertreter: Siemens Patent Attorneys
(86) Internationale Anmeldenummer: PCT/EP2020/063128
(87) Internationale Veröffentlichungsnummer: WO 2020/249342

(56) Entgegenhaltungen:
- US-A1- 2013 114 614
- US-A1- 2014 361 608

## Beschreibung

Die Erfindung bezieht sich auf Rechenanlagen sowie auf Verfahren zum Betreiben von Rechenanlagen.

Es entsteht zunehmend Bedarf an Fernwartung (fachsprachlich "Remote-Access") für sicherheitskritische Rechenanlagen. Die zu wartenden Anlagenelemente befinden sich jedoch bei bestimmten Anwendungen in einer besonderen Sicherheitszone, auf die kein direkter Fernzugriff möglich ist.

Zudem besteht ein steigender Bedarf an der Vernetzung sicherheitsrelevanter Anlagen mit herkömmlichen IT-Systemen. Bei einer derartigen Vernetzung ist sicherzustellen, dass über die Verbindung dieser Datennetzwerke nur zulässige Informationselemente übertragen werden. Für alle anderen und damit nichtzulässigen Informationen sind die Datennetzwerke voneinander zu trennen.

Die Verbindung der Datennetzwerke kann bekanntermaßen bidirektional z. B. mit Routern oder Gateways erfolgen, die über Firewalls verfügen. Kritische Netzwerke mit sehr hohem Schutzbedarf werden heute jedoch in der Regel vollständig getrennt von anderen Netzen - wie dem Office-Netzwerk oder dem Internet - betrieben.

Um z. B. Diagnosedaten aus einem sicherheitskritischen Netzwerk auszuleiten, um sie an einer entfernten Stelle von einem Experten analysieren zu können, werden heute Datendioden eingesetzt, die den Schutz des kritischen Netzwerkes nicht kompromittieren.

Ein bisher ungelöstes Problem besteht nun darin, wie mit einem ähnlich hohen Sicherheitsanspruch Daten auch in die andere Richtung, also von dem unsicheren Netzwerk (z. B. offenes Netzwerk) in das sicherheitskritische Netzwerk (geschlossenes Netzwerk) transportiert werden können. Diese Daten werden z. B. dafür benötigt, um bestehende Konfigurationen zu ändern oder Updates in die dort vorhandenen Komponenten einzuspielen. F

Aus der Patentanmeldung mit der Veröffentlichungsnummer US2014/361608 A1 ist ein PoE-System mit einer Vorrichtung bekannt, die einen isolierten, lokalen Datenspeicher umfasst, sowie Dioden zur Übertragung von Daten ausschließlich in eine Richtung.

Der Erfindung liegt die Aufgabe zugrunde, Rechenanlagen und Verfahren zu deren Betrieb mit Blick auf einen sicheren Datenempfang von außen weiterzuentwickeln.

Diese Aufgabe wird erfindungsgemäß durch eine Rechenanlage mit den Merkmalen gemäß Patentanspruch 1 gelöst. Vorteilhafte Ausgestaltungen der erfindungsgemäßen Rechenanlage sind in Unteransprüchen angegeben.

Danach ist erfindungsgemäß vorgesehen, dass die Rechenanlage einen Eingangsdatenpfad, der eine Schnittstelleneinrichtung der Rechenanlage mit der Recheneinrichtung unidirektional verbindet, und eine Ausgangsdatendiode, die die Recheneinrichtung unidirektional mit zumindest einer Ausgangsschnittstelle der Rechenanlage verbindet, aufweist, der Eingangsdatenpfad eine der Schnittstelleneinrichtung nachgeordnete Reihenschaltung, die eine Eingangsdatendiode und eine Datenschleuse umfasst, aufweist, die Eingangsdatendiode eine Datenübertragung in Richtung der Recheneinrichtung erlaubt und in Gegenrichtung unterbindet und die Datenschleuse einen ersten und zweiten Anschluss sowie einen Zwischenspeicher zur Zwischenspeicherung von Daten aufweist und derart ausgestaltet ist, dass der Zwischenspeicher wahlweise ausschließlich mit dem ersten oder zweiten Anschluss verbindbar ist, aber nicht gleichzeitig mit beiden Anschlüssen.

Ein wesentlicher Vorteil der erfindungsgemäßen Rechenanlage ist darin zu sehen, dass durch die erfindungsgemäße Kombination von Eingangsdatendiode und Datenschleuse durchgängig eine Trennung zwischen der Recheneinrichtung und externen Datensendeeinrichtungen gewährleistet ist, so dass letztgenannte zu keinem Zeitpunkt einen unmittelbaren Einfluss auf die Recheneinrichtung ausüben können. Alle Daten, die von einer externen Datensendeeinrichtung in Richtung der Recheneinrichtung übermittelt werden, werden zunächst zumindest in der Datenschleuse zwischengespeichert, so dass ein unmittelbarer Angriff nicht möglich ist.

Die Datenschleuse kann der Eingangsdatendiode vorgeordnet sein und mit ihrem ersten Anschluss mit der Schnittstelleneinrichtung und mit ihrem zweiten Anschluss mit der Eingangsdatendiode in Verbindung stehen. Als besonders vorteilhaft wird es jedoch angesehen, wenn die Datenschleuse der Eingangsdatendiode nachgeordnet ist und mit ihrem ersten Anschluss mit der Eingangsdatendiode und mit ihrem zweiten Anschluss mit der Recheneinrichtung in Verbindung steht.

Als vorteilhaft wird es angesehen, wenn die Schnittstelleneinrichtung zum Empfang einer Anfragenachricht geeignet ist, die den Wunsch einer externen Datensendeeinrichtung nach einer Datenübertragung zu der Recheneinrichtung anzeigt, mindestens eine Hilfsrecheneinrichtung vorhanden ist, die derart ausgestaltet ist, dass sie zu vorgegeben Zeitpunkten oder Zeitschlitzen einen Empfang externer Daten erlaubt und außerhalb der vorgegebenen Zeitpunkte oder Zeitschlitze unterbindet, und die Ausgangsdatendiode die Recheneinrichtung mit der mindestens einen Hilfsrecheneinrichtung verbindet und eine Datenübertragung in Richtung der Hilfsrecheneinrichtung erlaubt und in Gegenrichtung unterbindet.

Die Schnittstelleneinrichtung ist vorzugsweise derart ausgestaltet, dass sie nach Empfang der Anfragenachricht eine die Anfrage enthaltende modifizierte Anfragenachricht erstellt und diese an die Eingangsdatendiode weiterleitet, wobei die modifizierte Anfragenachricht Identifikationsdaten der Schnittstelleneinrichtung enthält.

Auch ist es von Vorteil, wenn die Schnittstelleneinrichtung derart ausgestaltet ist, dass sie nach Empfang der Anfragenachricht eine Prüfung durchführt, ob die Anfragenachricht von einer externen Datensendeeinrichtung stammt, die zum Übertragen von Daten autorisiert ist, und im Falle einer Anfragenachricht von einer autorisierten Datensendeeinrichtung die Anfragenachricht oder die modifizierte Anfragenachricht an die Eingangsdatendiode sendet und dies andernfalls unterlässt.

Die Schnittstelleneinrichtung führt vorzugsweise nach Empfang der Anfragenachricht eine Prüfung durch, ob die Anfragenachricht Steuerbefehle oder ausführbare Softwaremodule enthält, und unterlässt vorzugsweise die Weiterleitung der Anfragenachricht an die Eingangsdatendiode, falls dies der Falle ist.

Die Recheneinrichtung erzeugt vorzugsweise nach Empfang der über die Eingangsdatendiode und die Datenschleuse weitergeleiteten Anfragenachricht oder modifizierten Anfragenachricht eine Antwortnachricht und sendet diese über die Ausgangsdatendiode zur externen Datensendeeinrichtung, wobei die Antwortnachricht zumindest einen zukünftigen Zeitpunkt oder Zeitschlitz angibt, zu dem Daten zu der Hilfsrecheneinrichtung gesendet werden können.

Die Antwortnachricht enthält vorzugsweise einen öffentlichen Schlüssel der Recheneinrichtung und/oder eine Adresse, insbesondere IP-Adresse, der Hilfsrecheneinrichtung.

Die Recheneinrichtung ist bevorzugt derart ausgestaltet, dass sie nach Empfang der Daten der Datensendeeinrichtung mit diesen einen Signaturdatensatz erstellt und diesen über die Ausgangsdatendiode zur externen Datensendeeinrichtung sendet.

Vorzugsweise ist ein weiterer Datenspeicher in der Eingangsdatendiode oder zwischen der Eingangsdatendiode und der Datenschleuse vorhanden. Die Anfragenachricht und/oder Daten der externen Datensendeeinrichtung werden vorzugsweise in dem weiteren Datenspeicher zwischengespeichert und erst anschließend aufgeteilt auf Datenpakete - Datenpaket für Datenpaket - über die Datenschleuse zur Recheneinrichtung übertragen.

Die Hilfsrecheneinrichtung ist vorzugsweise derart ausgestaltet, dass sie bei oder nach Empfang von Daten von einer externen Datensendeeinrichtung prüft, ob diese eine autorisierte Datensendeeinrichtung ist und/oder zu dieser zuvor von der Recheneinrichtung eine Antwortnachricht gesendet worden ist, im Falle eines negativen Prüfungsergebnisses die Weiterleitung der Daten an die Recheneinrichtung unterlässt und im Falle eines positiven Prüfungsergebnisses die empfangenen Daten über die Eingangsdatendiode und die Datenschleuse an die Recheneinrichtung weiterleitet.

Die Schnittstelleneinrichtung und/oder die Ausgangsschnittstelle sind vorzugsweise durch die Hilfsrecheneinrichtung gebildet.

Die Erfindung bezieht sich darüber hinaus auf eine eisenbahntechnische Anlage, insbesondere ein Stellwerk oder ein Schienenfahrzeug. Erfindungsgemäß weist die eisenbahntechnische Anlage eine Rechenanlage wie oben beschrieben auf.

Die Erfindung bezieht sich darüber hinaus auf ein Verfahren zum Betreiben einer Rechenanlage, insbesondere einer solchen wie oben beschrieben. Erfindungsgemäß ist vorgesehen, dass Daten über einen Eingangsdatenpfad zu der Recheneinrichtung gesendet werden, wobei der Eingangsdatenpfad eine einer Schnittstelleneinrichtung nachgeordnete Reihenschaltung, die eine Eingangsdatendiode und eine Datenschleuse umfasst, aufweist, wobei die Eingangsdatendiode eine Datenübertragung in Richtung der Recheneinrichtung erlaubt und in Gegenrichtung unterbindet und wobei die Datenschleuse einen ersten und zweiten Anschluss sowie einen Zwischenspeicher zur Zwischenspeicherung von Daten aufweist und der Zwischenspeicher wahlweise ausschließlich mit dem ersten oder dem zweiten Anschluss verbunden wird, aber nicht gleichzeitig mit beiden Anschlüssen.

Bezüglich der Vorteile des erfindungsgemäßen Verfahrens sowie bezüglich vorteilhafter Ausgestaltungen des erfindungsgemäßen Verfahrens sei auf die obigen Ausführungen im Zusammenhang mit der erfindungsgemäßen Rechenanlage verwiesen.

Vorteilhaft ist es, wenn mit der Recheneinrichtung nach Empfang einer Anfragenachricht eine Antwortnachricht, die zumindest einen zukünftigen Zeitpunkt oder Zeitschlitz definiert, erzeugt wird und die Antwortnachricht über eine Ausgangsdatendiode zu der Datensendeeinrichtung gesandt wird, mit einer Hilfsrecheneinrichtung zu dem in der Antwortnachricht angegebenen Zeitpunkt oder Zeitschlitz ein Datenempfang von der externen Datensendeeinrichtung erlaubt wird und die Daten der externen Datensendeeinrichtung empfangen werden und die empfangenen Daten über den Eingangsdatenpfad zur Recheneinrichtung übermittelt werden.

Auch ist es vorteilhaft, wenn die Recheneinrichtung nach Empfang der Daten der Datensendeeinrichtung mit den Daten einen Signaturdatensatz erstellt und diesen über die Ausgangsdatendiode zur externen Datensendeeinrichtung sendet, und die Recheneinrichtung die empfangene Daten nur verwertet oder berücksichtigt, wenn die Datensendeeinrichtung nach Empfang des Signaturdatensatzes rückmeldet, dass der Signaturdatensatz einen korrekten Datenempfang bestätigt.

Darüber hinaus wird es als vorteilhaft angesehen, wenn
- mit der Schnittstelleneinrichtung nach Empfang der Anfragenachricht eine die Anfrage enthaltende modifizierte Anfragenachricht erstellt und diese an die Eingangsdatendiode weiterleitet wird, wobei die modifizierte Anfragenachricht Identifikationsdaten der Schnittstelleneinrichtung enthält und/oder
- nach Empfang der Anfragenachricht eine Prüfung durchgeführt wird, ob die Anfragenachricht von einer externen Datensendeeinrichtung stammt, die zum Übertragen von Daten autorisiert ist, im Falle einer Anfragenachricht von einer autorisierten Datensendeeinrichtung die Anfragenachricht oder die modifizierte Anfragenachricht an die Eingangsdatendiode gesendet wird und dies andernfalls unterlassen wird und/oder
- nach Empfang der Anfragenachricht eine Prüfung durchgeführt wird, ob die Anfragenachricht Steuerbefehle oder ausführbare Softwaremodule enthält, und falls dies der Fall ist, die Weiterleitung der Anfragenachricht an die Eingangsdatendiode unterlassen wird und/oder
- die Recheneinrichtung nach Empfang der über die Eingangsdatendiode und die Datenschleuse weitergeleiteten Anfragenachricht oder modifizierten Anfragenachricht eine Antwortnachricht erzeugt und über die Ausgangsdatendiode zur externen Datensendeeinrichtung sendet, wobei die Antwortnachricht zumindest einen zukünftigen Zeitpunkt oder Zeitschlitz mittelbar oder unmittelbar angibt, zu dem Daten zu der Hilfsrecheneinrichtung gesendet werden können und/oder
- die Antwortnachricht einen öffentlichen Schlüssel der Recheneinrichtung und/oder eine Adresse der Hilfsrecheneinrichtung enthält und/oder
- die Recheneinrichtung nach Empfang der Daten der Datensendeeinrichtung mit diesen einen Signaturdatensatz erstellt und den Signaturdatensatz über die Ausgangsdatendiode zur externen Datensendeeinrichtung sendet und/oder
- in einem Zwischenspeicher in der Eingangsdatendiode oder mit einem Zwischenspeicher zwischen der Eingangsdatendiode und der Datenschleuse die Anfragenachricht und/oder die Daten der externen Datensendeeinrichtung zwischengespeichert werden und erst anschließend aufgeteilt auf Datenpakete Datenpaket für Datenpaket über die Datenschleuse zur Recheneinrichtung übertragen werden und/oder
- die Hilfsrecheneinrichtung zu vorgegebenen Zeitpunkten oder Zeitschlitzen einen Datenempfang ermöglicht und empfangene Daten über die Eingangsdatendiode und die Datenschleuse zur Recheneinrichtung weiterleitet und/oder
- die Hilfsrecheneinrichtung bei Datenempfang von einer externen Datensendeeinrichtung prüft, ob diese eine autorisierte Datensendeeinrichtung ist und/oder zu dieser zuvor eine Antwortnachricht gesendet worden ist, im Falle eines negativen Prüfungsergebnisses die Weiterleitung der Daten an die Recheneinrichtung unterlässt und im Falle eines positiven Prüfungsergebnisses die empfangenen Daten über die Eingangsdatendiode und die Datenschleuse an die Recheneinrichtung weiterleitet und/oder
- in dem Eingangsdatenpfad zumindest ein Medienwechsel, insbesondere zumindest ein physikalischer Medienwechsel, ein Protokollwechsel und/oder ein Transport-Medienwechsel, durchgeführt wird und/oder
- zur Fehlererkennung bei der Datenübertragung Sequenzen gezählt und/oder Signaturen übertragen werden.

Die Erfindung wird nachfolgend anhand von Ausführungsbeispielen näher erläutert; dabei zeigen beispielhaft:
- Figur 1: ein Ausführungsbeispiel für eine erfindungsgemäße Rechenanlage, zu der von einer externen Datensendeeinrichtung eine Anfragenachricht übermittelt wird,
- Fig. 2-10: weitere Darstellungen der Rechenanlage gemäß Figur 1 während und nach der Bearbeitung der Anfragenachricht und
- Figur 11: ein weiteres Ausführungsbeispiel für eine erfindungsgemäße Rechenanlage.

In den Figuren werden der Übersicht halber für identische oder vergleichbare Komponenten stets dieselben Bezugszeichen verwendet.

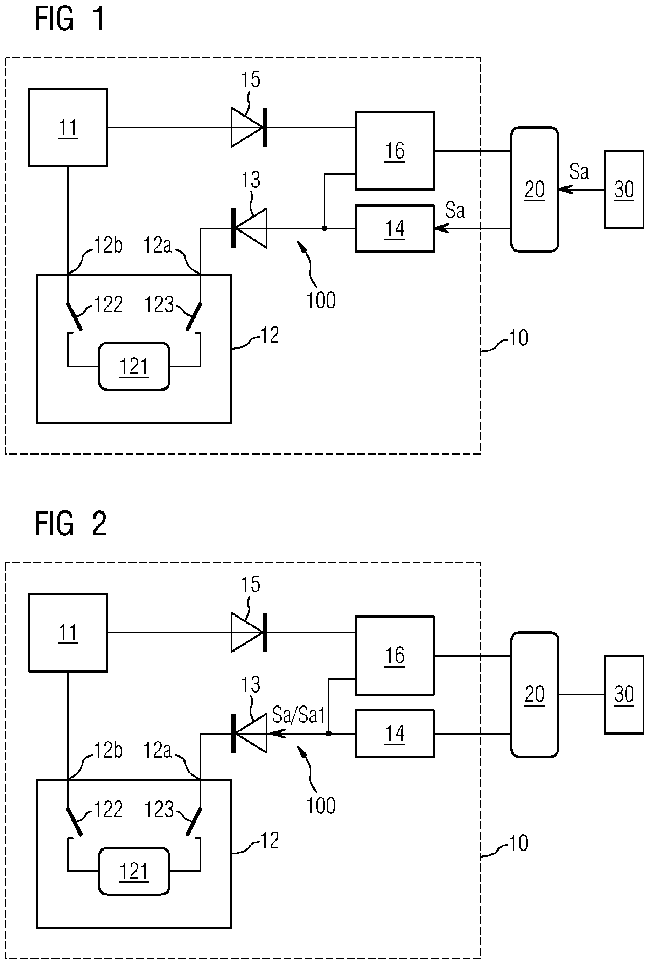

Die Figur 1 zeigt eine Rechenanlage 10, die eine Recheneinrichtung 11 aufweist. Die Recheneinrichtung 11 steht über eine Datenschleuse 12, eine Eingangsdatendiode 13 sowie über eine Schnittstelleneinrichtung 14 mit einem nur angedeuteten Kommunikationsnetz 20 in Verbindung. Über das Kommunikationsnetz 20 kann die Rechenanlage 10 Anfragenachrichten Sa einer externen Datensendeeinrichtung 30 empfangen. Bei dem Kommunikationsnetz 20 kann es sich beispielsweise um das Internet handeln.

Die Datenschleuse 12 weist einen ersten Anschluss 12a auf, der mit der Eingangsdatendiode 13 in Verbindung steht. Ein zweiter Anschluss 12b der Datenschleuse 12 ist mit der Recheneinrichtung 11 verbunden. Die Datenschleuse 12 umfasst einen Zwischenspeicher 121, der eine Zwischenspeicherung von Daten ermöglicht. Der Zwischenspeicher 121 steht über einen ersten Schalter 122 mit dem zweiten Anschluss 12b und über einen zweiten Schalter 123 mit dem ersten Anschluss 12a in Verbindung. Die beiden Schalter 122 und 123 können gleichzeitig ausgeschaltet sein, werden aber niemals gleichzeitig eingeschaltet. Der Zwischenspeicher 121 kann also entweder isoliert sein oder mit einem einzigen der beiden Anschlüsse 12a bzw. 12b verbunden sein. Die Ansteuerung der Schalter 122 und 123 kann durch eine interne Steuereinheit der Datenschleuse 12 erfolgen oder von außen beispielsweise durch die Recheneinrichtung 11.

Bei dem Ausführungsbeispiel gemäß Figur 1 bilden die Datenschleuse 12, die Eingangsdatendiode 13 und die Schnittstelleneinrichtung 14 einen Eingangsdatenpfad 100 der Rechenanlage 10, der eine intransparente unidirektionale Datenübertragung von der Schnittstelleneinrichtung 14 in Richtung der Recheneinrichtung 11 ermöglicht. Für das Erreichen der Intransparenz ist die Datenschleuse 12 vorgesehen, deren erster Anschluss 12a mit der Eingangsdatendiode 13 verbunden werden kann, um von der Eingangsdatendiode 13 Daten zu empfangen; zu diesem Zeitpunkt ist der zweite Anschluss 12b der Datenschleuse 12 von der Recheneinrichtung 11 getrennt, so dass kein unmittelbarer bzw. direkter Datenfluss von der Eingangsdatendiode 13 in Richtung der Recheneinrichtung 11 möglich ist. Daten, die von der Eingangsdatendiode 13 über den ersten Anschluss 12a in die Datenschleuse 12 eingespeist werden, werden zunächst in dem Zwischenspeicher 121 zwischengespeichert. Nach erfolgter Zwischenspeicherung kann die Datenschleuse 12 umgeschaltet werden, wobei der erste Anschluss 12a von der Eingangsdatendiode 13 getrennt und erst anschließend der zweite Anschluss 12b der Datenschleuse 12 mit der Recheneinrichtung 11 verbunden wird. Die Datenschleuse 12 ist mit anderen Worten derart ausgestaltet, dass ihre beiden Anschlüsse 12a und 12b stets ausschließlich entweder mit der Eingangsdatendiode 13 oder mit der Recheneinrichtung 11 verbunden sind, aber niemals mit beiden Anschlüssen bzw. beiden Einheiten gleichzeitig.

Die Recheneinrichtung 11 ist ausgangsseitig über eine unidirektional arbeitende Ausgangsdatendiode 15 mit dem Kommunikationsnetz 20 und der externen Datensendeeinrichtung 30 verbindbar, sei es unmittelbar oder mittelbar, beispielsweise über eine Hilfsrecheneinrichtung, nachfolgend auch kurz Hilfseinrichtung 16 genannt, der Rechenanlage 10, die Schnittstelleneinrichtung 14 oder eine andere nicht weiter dargestellte Komponente der Rechenanlage 10.

Die Rechenanlage 10 gemäß Figur 1 kann beispielsweise wie folgt betrieben werden:
Sendet die externe Datensendeeinrichtung 30 eine Anfragenachricht Sa an die Schnittstelleneinrichtung 14, mit der die externe Datensendeeinrichtung 30 den Wunsch nach einer Datenübertragung von Daten in Richtung der Recheneinrichtung 11 anzeigt, so wird die Schnittstelleneinrichtung 14 die Anfragenachricht Sa verarbeiten. Die Schnittstelleneinrichtung 14 kann beispielsweise prüfen, ob die Anfragenachricht von einer bekannten Quelle bzw. in ausreichend signierter Form übertragen worden ist und/oder frei von Steuerbefehlen oder Steuerprogrammen ist.

Stellt die Schnittstelleneinrichtung 14 bei ihrer Prüfung fest, dass die Anfragenachricht Sa unkritisch ist, so kann sie diese unverändert oder in modifizierter Form als modifizierte Anfragenachricht Sa1 über den unidirektionalen Eingangsdatenpfad 100 in Richtung der Recheneinrichtung 11 übermitteln. Die Figur 2 zeigt die Weiterleitung der modifizierten Anfragenachricht Sa1.

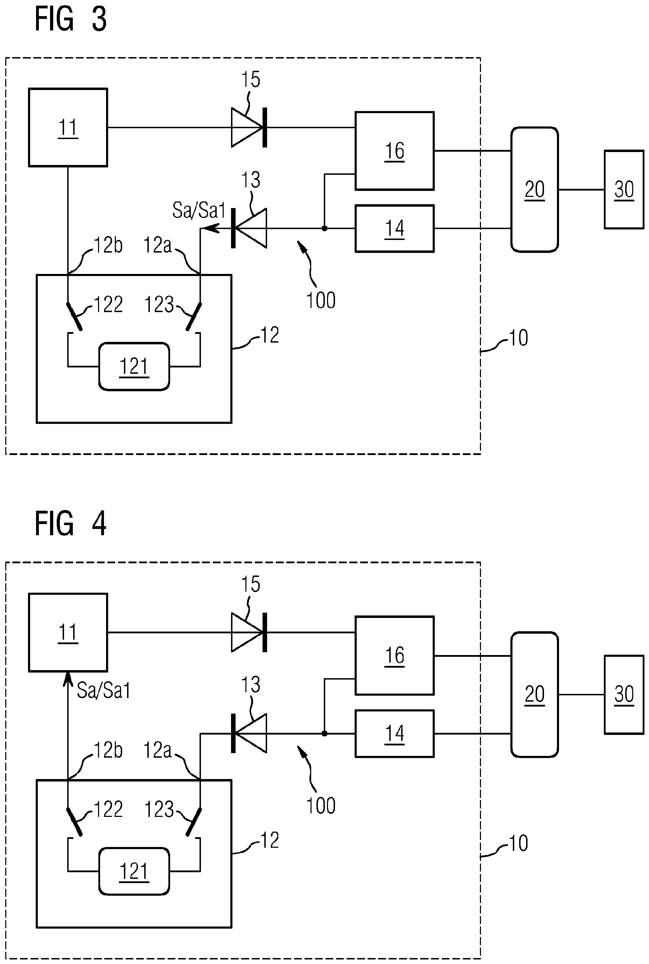

Die Figur 3 zeigt, wie die Anfragenachricht Sa bzw. die modifizierte Anfragenachricht Sa1 über den unidirektionalen Eingangsdatenpfad 100 zur Eingangsdatendiode 13 und von dieser zum ersten Anschluss 12a der Datenschleuse 12 gelangt.

Ist die Datenschleuse 12 bzw. deren Zwischenspeicher 121 über den ersten Anschluss 12a mit der Eingangsdatendiode 13 verbunden, so kann die Anfragenachricht Sa bzw. die modifizierte Anfragenachricht Sa1 im Zwischenspeicher 121 abgespeichert werden.

Sobald der erste Anschluss 12a der Datenschleuse 12 von der Eingangsdatendiode 13 getrennt ist, kann der zweite Anschluss 12b der Datenschleuse 12 mit der Recheneinrichtung 11 verbunden und die in dem Zwischenspeicher 121 gespeicherte Anfragenachricht Sa bzw. die modifizierte Anfragenachricht Sa1 zur Recheneinrichtung 11 übertragen werden (siehe Figur 4).

Sobald die Recheneinrichtung 11 die Anfragenachricht Sa bzw. die modifizierte Anfragenachricht Sa1 erhalten hat, kann sie diese verarbeiten und entscheiden, ob sie Daten der externen Datensendeeinrichtung 30 empfangen will bzw. darf.

Nachfolgend wird beispielhaft davon ausgegangen, dass die Anfragenachricht Sa bzw. die modifizierte Anfragenachricht Sa1 der Recheneinrichtung 11 signalisieren, dass Update-Nachrichten bzw. Update-Software von der externen Datensendeeinrichtung übertragen werden soll und eine solche Übertragung auch zulässig ist.

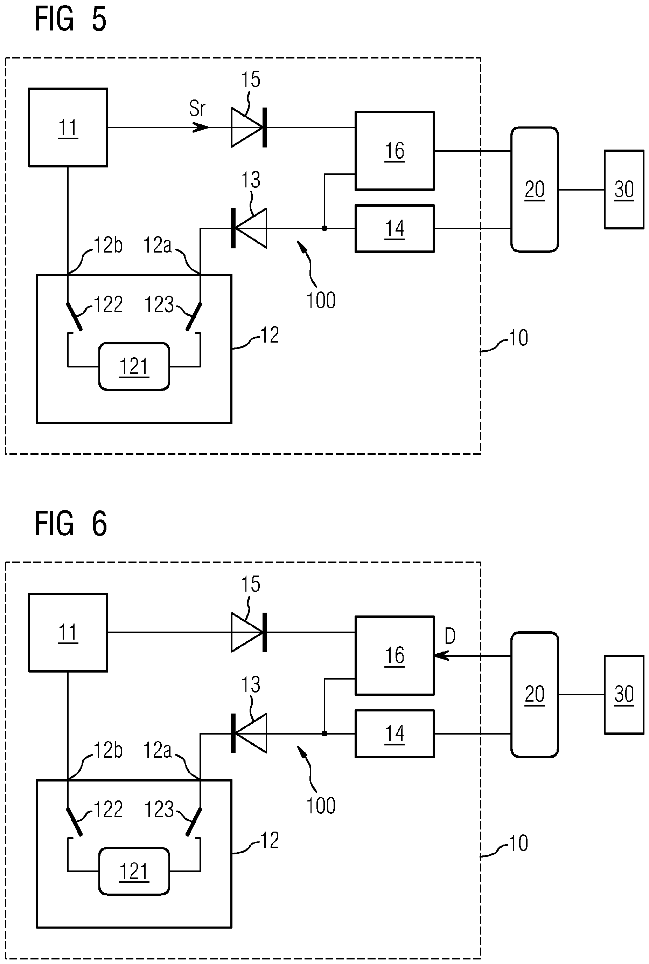

Die Recheneinrichtung 11 wird im letztgenannten Fall über die Ausgangsdatendiode 15 eine Antwortnachricht Sr an das Kommunikationsnetz 20 und damit an die externe Datensendeeinrichtung 30 übermitteln, wie dies beispielhaft die Figur 5 zeigt. Das Übermitteln der Antwortnachricht Sr kann unmittelbar von der Ausgangsdatendiode 15 über das Kommunikationsnetz 20 zur externen Datensendereinrichtung 30 erfolgen oder stattdessen mittelbar über die Hilfseinrichtung 16 oder die Schnittstelleneinrichtung 14.

Die Antwortnachricht Sr enthält vorzugsweise Angaben bezüglich eines vorgegebenen Zeitpunkts oder Zeitschlitzes, zu dem die Hilfseinrichtung 16 der Rechenanlage 10 für einen Datenempfang weiterer Daten der externen Datensendeeinrichtung 30 zur Verfügung steht und einen weiteren Datenempfang ermöglichen wird.

Sobald die externe Datensendeeinrichtung 30 die Antwortnachricht Sr von der Recheneinrichtung 11 empfangen hat, so kann sie unter Einhaltung der vorgegebenen Zeitpunkte bzw. Zeitschlitze, die von der Recheneinrichtung 11 vorgegeben worden sind, ihre Daten D, beispielsweise Update-Daten, zu der Hilfseinrichtung 16 übermitteln (siehe Figur 6).

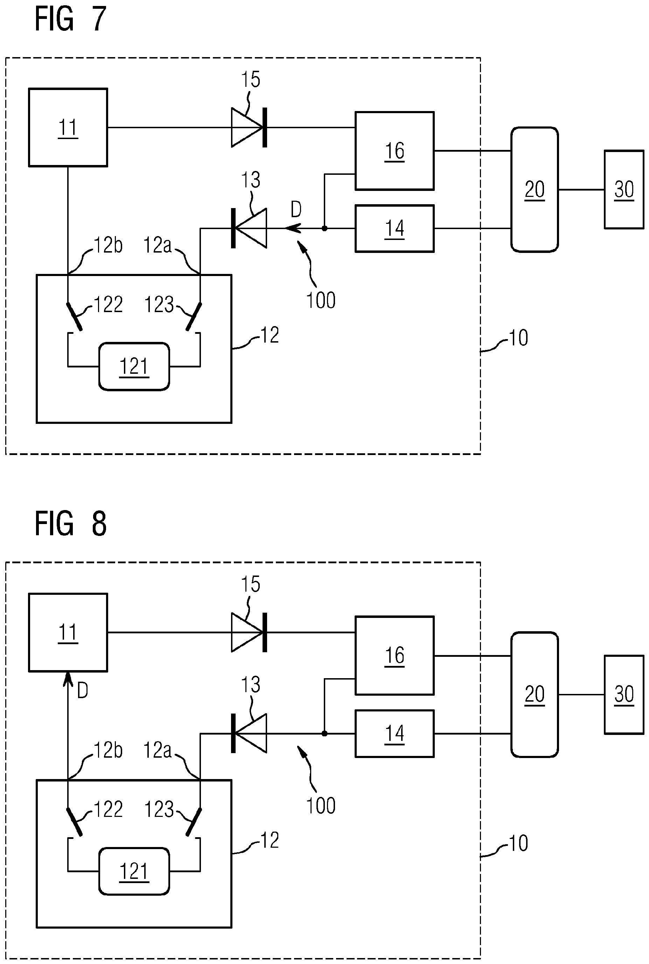

Die Hilfseinrichtung 16 wird zu den vorgegebenen Zeitpunkten bzw. Zeitschlitzen die Daten erwarten und diese über den Eingangsdatenpfad 100 zur Recheneinrichtung 11 übermitteln (siehe Figur 7). Die Hilfseinrichtung 16 erhält die Information über die vorgegebenen Zeitpunkte bzw. Zeitschlitze, zu denen sie einen Datenempfang ermöglichen soll, beispielsweise durch die Antwortnachricht Sr, sofern diese über die Hilfseinrichtung 16 in das Kommunikationsnetz 20 eingespeist wird; andernfalls wird sie von der Recheneinrichtung 11 separat informiert.

Die von der externen Datensendeeinrichtung 30 über die Hilfseinrichtung 16 zu den vorgegebenen Zeitpunkten bzw. Zeitschlitzen übertragenen Daten D werden über den Eingangsdatenpfad 100 und damit über die Datenschleuse 12 übermittelt, so dass ein unmittelbarer Zugriff der externen Datensendeeinrichtung 30 bzw. der Hilfseinrichtung 16 auf die Recheneinrichtung 11 wiederum zu keinem Zeitpunkt transparent möglich ist.

Nachdem - vorzugsweise Datenpaket für Datenpaket - die Daten D der externen Datensendeeinrichtung 30 über die Hilfseinrichtung 16 und die Datenschleuse 12 zur Recheneinrichtung 11 übertragen worden sind (siehe Figur 8), kann die Recheneinrichtung 11 überprüfen, ob die empfangenen Datenpakete bzw. die empfangenen Daten D insgesamt unbeschädigt bzw. unverändert übertragen bzw. empfangen worden sind; eine solche Prüfung kann beispielsweise anhand von Prüfsummen, Hashcodes oder dergleichen erfolgen.

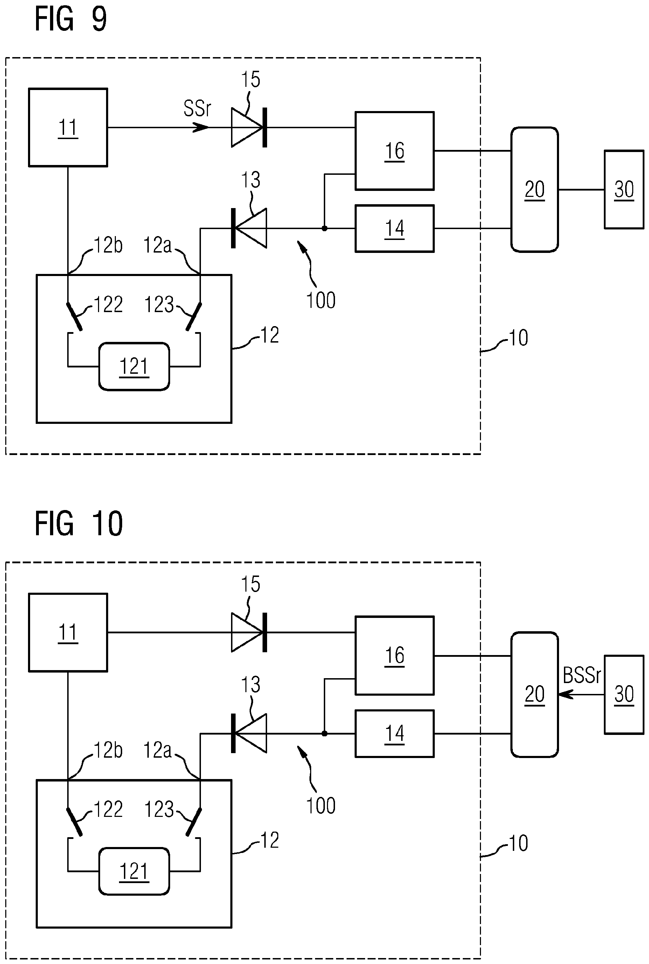

Kommt die Recheneinrichtung 11 zu dem Ergebnis, dass die empfangenen Daten der externen Datensendeeinrichtung 30 korrekt empfangen worden sind, so kann sie einen Signaturdatensatz SSr erzeugen und diesen über die Ausgangsdatendiode 15 und das Kommunikationsnetz 20 zu der externen Datensendeeinrichtung 30 übermitteln. Die Übermittlung kann die Hilfseinrichtung 16 und/oder die Schnittstelleneinrichtung 14 oder eine andere in der Figur 1 nicht gezeigte Komponente einbeziehen (siehe Figur 9).

Die externe Datensendeeinrichtung 30 hat nunmehr die Möglichkeit, anhand des empfangenen Signaturdatensatzes SSr ihrerseits zu prüfen, ob die von der Recheneinrichtung 11 empfangenen Daten D korrekt sind bzw. von dieser korrekt empfangen worden sind. Stellt sie anhand des Signaturdatensatzes SSr fest, dass ein korrekter Datenempfang seitens der Recheneinrichtung 11 über den Eingangsdatenpfad 100 erfolgt ist, so überträgt sie ausgangsseitig ein Bestätigungssignal BSSr über die Schnittstelleneinrichtung 14 und den Eingangsdatenpfad 100, also unter Einschluss der Datenschleuse 12, zur Recheneinrichtung 11 (siehe Figur 10).

Erst nachdem die Recheneinrichtung 11 dieses Bestätigungssignal BSSr von der externen Datensendeeinrichtung 30 erhalten hat, geht sie davon aus, dass der Datenempfang über den Eingangsdatenpfad 100 korrekt verlaufen ist und die Daten D verwertet werden können.

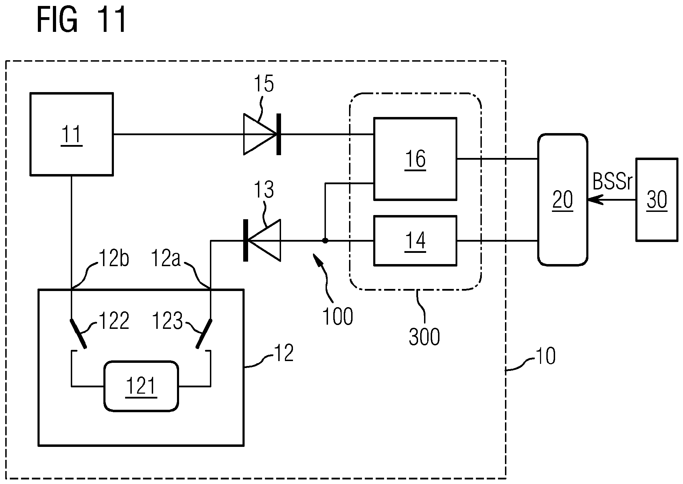

Bei der Darstellung gemäß den Figuren 1 bis 10 wird beispielhaft davon ausgegangen, dass die Hilfseinrichtung 16 eine von der Schnittstelleneinrichtung 14 getrennte bzw. separate Komponente ist. Alternativ kann vorgesehen sein, dass die Hilfseinrichtung 16 und die Schnittstelleneinrichtung 14 innerhalb einer gemeinsamen Recheneinrichtung integriert sind, die beispielhaft in der Figur 11 mit dem Bezugszeichen 300 gekennzeichnet ist.

Darüber hinaus kann alternativ vorgesehen sein, dass die Hilfseinrichtung 16 in der Schnittstelleneinrichtung 14 integriert ist oder aber die Schnittstelleneinrichtung 14 in der Hilfseinrichtung 16 integriert ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rechenanlage (10) mit einer Recheneinrichtung (11), wobei
- die Rechenanlage (10) einen Eingangsdatenpfad (100), der eine Schnittstelleneinrichtung (14) der Rechenanlage (10) mit der Recheneinrichtung (11) unidirektional verbindet, und eine Ausgangsdatendiode (15), die die Recheneinrichtung (11) unidirektional mit zumindest einer Ausgangsschnittstelle der Rechenanlage (10) verbindet, aufweist, **dadurch gekennzeichnet, dass**
- der Eingangsdatenpfad (100) eine der Schnittstelleneinrichtung (14) nachgeordnete Reihenschaltung, die eine Eingangsdatendiode (13) und eine Datenschleuse (12) umfasst, aufweist,
- die Eingangsdatendiode (13) eine Datenübertragung in Richtung der Recheneinrichtung (11) erlaubt und in Gegenrichtung unterbindet und
- die Datenschleuse (12) einen ersten und zweiten Anschluss (12a, 12b) sowie einen Zwischenspeicher (121) zur Zwischenspeicherung von Daten (D) aufweist und derart ausgestaltet ist, dass der Zwischenspeicher (121) wahlweise ausschließlich mit dem ersten oder zweiten Anschluss verbindbar ist, aber nicht gleichzeitig mit beiden Anschlüssen.

2. Rechenanlage (10) nach Anspruch 1,
**dadurch gekennzeichnet, dass**
- die Schnittstelleneinrichtung (14) zum Empfang einer Anfragenachricht (Sa) geeignet ist, die den Wunsch einer externen Datensendeeinrichtung (30) nach einer Datenübertragung zu der Recheneinrichtung (11) anzeigt,
- mindestens eine Hilfsrecheneinrichtung (16) vorhanden ist, die derart ausgestaltet ist, dass sie zu vorgegebenen Zeitpunkten oder Zeitschlitzen einen Empfang externer Daten (D) erlaubt und außerhalb der vorgegebenen Zeitpunkte oder Zeitschlitze unterbindet, und
- die Ausgangsdatendiode (15) die Recheneinrichtung (11) mit der mindestens einen Hilfsrecheneinrichtung (16) verbindet und eine Datenübertragung in Richtung der Hilfsrecheneinrichtung (16) erlaubt und in Gegenrichtung unterbindet.

3. Rechenanlage (10) nach einem der voranstehenden Ansprüche,
**dadurch gekennzeichnet, dass**
- die Schnittstelleneinrichtung (14) derart ausgestaltet ist, dass sie nach Empfang der Anfragenachricht (Sa) eine die Anfrage enthaltende modifizierte Anfragenachricht (Sa1) erstellt und diese an die Eingangsdatendiode (13) weiterleitet,
- wobei die modifizierte Anfragenachricht (Sa1) Identifikationsdaten der Schnittstelleneinrichtung (14) enthält.

4. Rechenanlage (10) nach einem der voranstehenden Ansprüche,
**dadurch gekennzeichnet, dass**
die Schnittstelleneinrichtung (14) derart ausgestaltet ist, dass sie
- nach Empfang der Anfragenachricht (Sa) eine Prüfung durchführt, ob die Anfragenachricht (Sa) von einer externen Datensendeeinrichtung (30) stammt, die zum Übertragen von Daten (D) autorisiert ist, und
- im Falle einer Anfragenachricht (Sa) von einer autorisierten Datensendeeinrichtung (30) die Anfragenachricht (Sa) oder die modifizierte Anfragenachricht (Sa1) an die Eingangsdatendiode (13) sendet und dies andernfalls unterlässt.

5. Rechenanlage (10) nach einem der voranstehenden Ansprüche,
**dadurch gekennzeichnet, dass**
die Schnittstelleneinrichtung (14) derart ausgestaltet ist, dass sie
- nach Empfang der Anfragenachricht (Sa) eine Prüfung durchführt, ob die Anfragenachricht (Sa) Steuerbefehle oder ausführbare Softwaremodule enthält, und
- falls dies der Falle ist, die Weiterleitung der Anfragenachricht (Sa) an die Eingangsdatendiode (13) unterlässt.

6. Rechenanlage (10) nach einem der voranstehenden Ansprüche,
**dadurch gekennzeichnet, dass**
- die Recheneinrichtung (11) derart ausgestaltet ist, dass sie nach Empfang der über die Eingangsdatendiode (13) und die Datenschleuse (12) weitergeleiteten Anfragenachricht (Sa) oder modifizierten Anfragenachricht (Sa1) eine Antwortnachricht (Sr) erzeugt und über die Ausgangsdatendiode (15) zur externen Datensendeeinrichtung (30) sendet,
- wobei die Antwortnachricht (Sr) zumindest einen zukünftigen Zeitpunkt oder Zeitschlitz angibt, zu dem Daten (D) zu der Hilfsrecheneinrichtung (16) gesendet werden können.

7. Rechenanlage (10) nach einem der voranstehenden Ansprüche,
**dadurch gekennzeichnet, dass**
die Antwortnachricht (Sr) einen öffentlichen Schlüssel der Recheneinrichtung (11) und/oder eine Adresse, insbesondere IP-Adresse, der Hilfsrecheneinrichtung (16) enthält.

8. Rechenanlage (10) nach einem der voranstehenden Ansprüche,
**dadurch gekennzeichnet, dass**
die Recheneinrichtung (11) derart ausgestaltet ist, dass sie nach Empfang der Daten (D) der Datensendeeinrichtung (30) mit diesen einen Signaturdatensatz (SSr) erstellt und diesen über die Ausgangsdatendiode (15) zur externen Datensendeeinrichtung (30) sendet.

9. Rechenanlage (10) nach einem der voranstehenden Ansprüche,
**dadurch gekennzeichnet, dass**
ein weiterer Datenspeicher in der Eingangsdatendiode (13) oder zwischen der Eingangsdatendiode (13) und der Datenschleuse (12) vorhanden ist und die Anfragenachricht (Sa) und/oder Daten (D) der externen Datensendeeinrichtung (30) in dem weiteren Datenspeicher zwischengespeichert werden und erst anschließend aufgeteilt auf Datenpakete - Datenpaket für Datenpaket - über die Datenschleuse (12) zur Recheneinrichtung (11) übertragen werden.

10. Rechenanlage (10) nach einem der voranstehenden Ansprüche,
**dadurch gekennzeichnet, dass**
die Hilfsrecheneinrichtung (16) derart ausgestaltet ist, dass sie
- bei oder nach Empfang von Daten (D) von einer externen Datensendeeinrichtung (30) prüft, ob diese eine autorisierte Datensendeeinrichtung (30) ist und/oder zu dieser zuvor von der Recheneinrichtung (11) eine Antwortnachricht (Sr) gesendet worden ist,
- im Falle eines negativen Prüfungsergebnisses die Weiterleitung der Daten (D) an die Recheneinrichtung (11) unterlässt und
- im Falle eines positiven Prüfungsergebnisses die empfangenen Daten (D) über die Eingangsdatendiode (13) und die Datenschleuse (12) an die Recheneinrichtung (11) weiterleitet.

11. Rechenanlage (10) nach einem der voranstehenden Ansprüche,
**dadurch gekennzeichnet, dass**
die Schnittstelleneinrichtung (14) und/oder die Ausgangsschnittstelle durch die Hilfsrecheneinrichtung (16) gebildet wird.

12. Eisenbahntechnische Anlage, insbesondere Stellwerk,
**dadurch gekennzeichnet, dass**
diese eine Rechenanlage (10) nach einem der voranstehenden Ansprüche aufweist.

13. Verfahren zum Betreiben einer Rechenanlage (10), insbesondere einer Rechenanlage (10) nach einem der voranstehenden Ansprüche, wobei
- Daten (D) über einen Eingangsdatenpfad (100) zu der Recheneinrichtung (11) gesendet werden,
- das Verfahren **dadurch gekennzeichnet, dass**
- -der Eingangsdatenpfad (100) eine einer Schnittstelleneinrichtung (14) nachgeordnete Reihenschaltung, die eine Eingangsdatendiode (13) und eine Datenschleuse (12) umfasst, aufweist,
- wobei die Eingangsdatendiode (13) eine Datenübertragung in Richtung der Recheneinrichtung (11) erlaubt und in Gegenrichtung unterbindet und
- wobei die Datenschleuse (12) einen ersten und zweiten Anschluss (12a, 12b) sowie einen Zwischenspeicher (121) zur Zwischenspeicherung von Daten (D) aufweist und der Zwischenspeicher (121) wahlweise ausschließlich mit dem ersten oder dem zweiten Anschluss verbunden wird, aber nicht gleichzeitig mit beiden Anschlüssen.

14. Verfahren nach Anspruch 13,
**dadurch gekennzeichnet, dass**
- mit der Recheneinrichtung (11) nach Empfang einer Anfragenachricht (Sa) eine Antwortnachricht (Sr), die zumindest einen zukünftigen Zeitpunkt oder Zeitschlitz definiert, erzeugt wird und die Antwortnachricht (Sr) über eine Ausgangsdatendiode (15) zu der Datensendeeinrichtung (30) gesandt wird,
- mit einer Hilfsrecheneinrichtung (16) zu dem in der Antwortnachricht (Sr) angegebenen Zeitpunkt oder Zeitschlitz ein Datenempfang von der externen Datensendeeinrichtung (30) erlaubt wird und die Daten (D) der externen Datensendeeinrichtung (30) empfangen werden und
- die empfangenen Daten (D) über den Eingangsdatenpfad (100) zur Recheneinrichtung (11) übermittelt werden.

15. Verfahren nach Anspruch 13 oder 14,
**dadurch gekennzeichnet, dass**
- die Recheneinrichtung (11) nach Empfang der Daten (D) der Datensendeeinrichtung (30) mit den Daten (D) einen Signaturdatensatz (SSr) erstellt und diesen über die Ausgangsdatendiode (15) zur externen Datensendeeinrichtung (30) sendet, und die Recheneinrichtung (11) die empfangene Daten (D) nur verwertet oder berücksichtigt, wenn die Datensendeeinrichtung (30) nach Empfang des Signaturdatensatzes rückmeldet, dass der Signaturdatensatz (SSr) einen korrekten Datenempfang bestätigt,
- mit der Schnittstelleneinrichtung (14) nach Empfang der Anfragenachricht (Sa) eine die Anfrage enthaltende modifizierte Anfragenachricht (Sa1) erstellt und diese an die Eingangsdatendiode (13) weiterleitet wird, wobei die modifizierte Anfragenachricht (Sa) Identifikationsdaten der Schnittstelleneinrichtung (14) enthält und/oder
- nach Empfang der Anfragenachricht (Sa) eine Prüfung durchgeführt wird, ob die Anfragenachricht (Sa) von einer externen Datensendeeinrichtung (30) stammt, die zum Übertragen von Daten (D) autorisiert ist, im Falle einer Anfragenachricht (Sa) von einer autorisierten Datensendeeinrichtung (30) die Anfragenachricht (Sa) oder die modifizierte Anfragenachricht (Sa1) an die Eingangsdatendiode (13) gesendet wird und dies andernfalls unterlassen wird und/oder
- nach Empfang der Anfragenachricht (Sa) eine Prüfung durchgeführt wird, ob die Anfragenachricht (Sa) Steuerbefehle oder ausführbare Softwaremodule enthält, und falls dies der Fall ist, die Weiterleitung der Anfragenachricht (Sa) an die Eingangsdatendiode (13) unterlassen wird und/oder
- die Recheneinrichtung (11) nach Empfang der über die Eingangsdatendiode (13) und die Datenschleuse (12) weitergeleiteten Anfragenachricht (Sa) oder modifizierten Anfragenachricht (Sa) eine Antwortnachricht (Sr) erzeugt und über die Ausgangsdatendiode (15) zur externen Datensendeeinrichtung (30) sendet, wobei die Antwortnachricht (Sr) zumindest einen zukünftigen Zeitpunkt oder Zeitschlitz mittelbar oder unmittelbar angibt, zu dem Daten (D) zu der Hilfsrecheneinrichtung (16) gesendet werden können und/oder
- die Antwortnachricht (Sr) einen öffentlichen Schlüssel der Recheneinrichtung (11) und/oder eine Adresse der Hilfsrecheneinrichtung (16) enthält und/oder
- die Recheneinrichtung (11) nach Empfang der Daten (D) der Datensendeeinrichtung (30) mit diesen einen Signaturdatensatz (SSr) erstellt und den Signaturdatensatz (SSr) über die Ausgangsdatendiode (15) zur externen Datensendeeinrichtung (30) sendet und/oder
- in einem weiteren Datenspeicher in der Eingangsdatendiode (13) oder mit einem weiteren Datenspeicher zwischen der Eingangsdatendiode (13) und der Datenschleuse (12) die Anfragenachricht (Sa) und/oder die Daten (D) der externen Datensendeeinrichtung (30) zwischengespeichert werden und erst anschließend aufgeteilt auf Datenpakete Datenpaket für Datenpaket über die Datenschleuse (12) zur Recheneinrichtung (11) übertragen werden und/oder
- die Hilfsrecheneinrichtung (16) zu vorgegebenen Zeitpunkten oder Zeitschlitzen einen Datenempfang ermöglicht und empfangene Daten (D) über die Eingangsdatendiode (13) und die Datenschleuse (12) zur Recheneinrichtung (11) weiterleitet und/oder
- die Hilfsrecheneinrichtung (16) bei Datenempfang von einer externen Datensendeeinrichtung (30) prüft, ob diese eine autorisierte Datensendeeinrichtung (30) ist und/oder zu dieser zuvor eine Antwortnachricht (Sr) gesendet worden ist, im Falle eines negativen Prüfungsergebnisses die Weiterleitung der Daten (D) an die Recheneinrichtung (11) unterlässt und im Falle eines positiven Prüfungsergebnisses die empfangenen Daten (D) über die Eingangsdatendiode (13) und die Datenschleuse (12) an die Recheneinrichtung (11) weiterleitet und/oder
- in dem Eingangsdatenpfad (100) zumindest ein Medienwechsel, insbesondere zumindest ein physikalischer Medienwechsel, ein Protokollwechsel und/oder ein Transport-Medienwechsel, durchgeführt wird und/oder
- zur Fehlererkennung bei der Datenübertragung Sequenzen gezählt und/oder Signaturen übertragen werden.

## Claims

1. Computing system (10) having a computing device (11), wherein
- the computing system (10) has an input data path (100), which unidirectionally connects an interface device (14) of the computing system (10) to the computing device (11), and an output data diode (15), which unidirectionally connects the computing device (11) to at least one output interface of the computing system (10),
**characterized in that**
- the input data path (100) has a series circuit which is arranged downstream of the interface device (14) and comprises an input data diode (13) and a data lock (12),
- the input data diode (13) allows data to be transmitted in the direction of the computing device (11) and prevents this in the opposite direction, and
- the data lock (12) has a first and a second connection (12a, 12b) and a buffer (121) for buffering data (D) and is configured such that the buffer (121) can either be exclusively connected to the first or second connection, but not to both connections at the same time.

2. Computing system (10) according to Claim 1,
**characterized in that**
- the interface device (14) is suitable for receiving a request message (Sa) which indicates the desire of an external data transmitting device (30) to transmit data to the computing device (11),
- at least one auxiliary computing device (16) is present and is configured in such a manner that it allows external data (D) to be received at predefined times or in predefined time slots and prevents this outside the predefined times or time slots, and
- the output data diode (15) connects the computing device (11) to the at least one auxiliary computing device (16) and allows data to be transmitted in the direction of the auxiliary computing device (16) and prevents this in the opposite direction.

3. Computing system (10) according to one of the preceding claims,
**characterized in that**
- the interface device (14) is configured in such a manner that, after receiving the request message (Sa), it creates a modified request message (Sa1) containing the request and forwards it to the input data diode (13),
- wherein the modified request message (Sa1) contains identification data relating to the interface device (14).

4. Computing system (10) according to one of the preceding claims,
**characterized in that**
the interface device (14) is configured in such a manner that
- after receiving the request message (Sa), it carries out a check in order to determine whether the request message (Sa) comes from an external data transmitting device (30) which is authorized to transmit data (D), and
- in the event of a request message (Sa) from an authorized data transmitting device (30), it transmits the request message (Sa) or the modified request message (Sa1) to the input data diode (13) and otherwise does not do so.

5. Computing system (10) according to one of the preceding claims,
**characterized in that**
the interface device (14) is configured in such a manner that
- after receiving the request message (Sa), it carries out a check in order to determine whether the request message (Sa) contains control commands or executable software modules, and
- if this is the case, it does not forward the request message (Sa) to the input data diode (13).

6. Computing system (10) according to one of the preceding claims,
**characterized in that**
- the computing device (11) is configured in such a manner that, after receiving the request message (Sa) or modified request message (Sa1) which has been forwarded via the input data diode (13) and the data lock (12), it generates a response message (Sr) and transmits it to the external data transmitting device (30) via the output data diode (15),
- wherein the response message (Sr) indicates at least one future time or time slot at which or in which data (D) can be transmitted to the auxiliary computing device (16).

7. Computing system (10) according to one of the preceding claims,
**characterized in that**
the response message (Sr) contains a public key of the computing device (11) and/or an address, in particular an IP address, of the auxiliary computing device (16).

8. Computing system (10) according to one of the preceding claims,
**characterized in that**
the computing device (11) is configured in such a manner that, after receiving the data (D) from the data transmitting device (30), it creates a signature data record (SSr) using said data and transmits it to the external data transmitting device (30) via the output data diode (15).

9. Computing system (10) according to one of the preceding claims,
**characterized in that**
a further data memory is present in the input data diode (13) or between the input data diode (13) and the data lock (12), and the request message (Sa) and/or data (D) from the external data transmitting device (30) is/are buffered in the further data memory and is/are only then transmitted, in a manner divided into data packets, to the computing device (11) data packet by data packet via the data lock (12).

10. Computing system (10) according to one of the preceding claims,
**characterized in that**
the auxiliary computing device (16) is configured in such a manner that
- while receiving or after receiving data (D) from an external data transmitting device (30), it checks whether this device is an authorized data transmitting device (30) and/or whether a response message (Sr) has previously been transmitted to it by the computing device (11),
- in the event of a negative checking result, it does not forward the data (D) to the computing device (11), and
- in the event of a positive checking result, it forwards the received data (D) to the computing device (11) via the input data diode (13) and the data lock (12).

11. Computing system (10) according to one of the preceding claims,
**characterized in that**
the interface device (14) and/or the output interface is/are formed by the auxiliary computing device (16).

12. Railway system, in particular signal tower,
**characterized in that**
it has a computing system (10) according to one of the preceding claims.

13. Method for operating a computing system (10), in particular a computing system (10) according to one of the preceding claims, wherein
- data (D) are transmitted to the computing device (11) via an input data path (100),
- the method **characterized in that**
- the input data path (100) has a series circuit which is arranged downstream of an interface device (14) and comprises an input data diode (13) and a data lock (12),
- wherein the input data diode (13) allows data to be transmitted in the direction of the computing device (11) and prevents this in the opposite direction, and
- wherein the data lock (12) has a first and a second connection (12a, 12b) and a buffer (121) for buffering data (D), and the buffer (121) is either exclusively connected to the first or the second connection, but not to both connections at the same time.

14. Method according to Claim 13,
**characterized in that**
- after receiving a request message (Sa), a response message (Sr), which defines at least one future time or time slot, is generated using the computing device (11) and the response message (Sr) is transmitted to the data transmitting device (30) via an output data diode (15),
- data are allowed to be received from the external data transmitting device (30) at the time or in the time slot indicated in the response message (Sr) using an auxiliary computing device (16) and the data (D) from the external data transmitting device (30) are received, and
- the received data (D) are transmitted to the computing device (11) via the input data path (100).

15. Method according to Claim 13 or 14,
**characterized in that**
- after receiving the data (D) from the data transmitting device (30), the computing device (11) creates a signature data record (SSr) using the data (D) and transmits it to the external data transmitting device (30) via the output data diode (15), and the computing device (11) only uses or considers the received data (D) if the data transmitting device (30), after receiving the signature data record, reports back that the signature data record (SSr) confirms correct data reception,
- after receiving the request message (Sa), a modified request message (Sa1) containing the request is created using the interface device (14) and is forwarded to the input data diode (13), wherein the modified request message (Sa) contains identification data relating to the interface device (14), and/or
- after receiving the request message (Sa), a check is carried out in order to determine whether the request message (Sa) comes from an external data transmitting device (30) which is authorized to transmit data (D), the request message (Sa) or the modified request message (Sa1) is transmitted to the input data diode (13) in the event of a request message (Sa) from an authorized data transmitting device (30) and this is otherwise not carried out, and/or
- after receiving the request message (Sa), a check is carried out in order to determine whether the request message (Sa) contains control commands or executable software modules, and, if this is the case, the request message (Sa) is not forwarded to the input data diode (13), and/or
- after receiving the request message (Sa) or modified request message (Sa) which has been forwarded via the input data diode (13) and the data lock (12), the computing device (11) generates a response message (Sr) and transmits it to the external data transmitting device (30) via the output data diode (15), wherein the response message (Sr) directly or indirectly indicates at least one future time or time slot at which or in which data (D) can be transmitted to the auxiliary computing device (16), and/or
- the response message (Sr) contains a public key of the computing device (11) and/or an address of the auxiliary computing device (16), and/or
- after receiving the data (D) from the data transmitting device (30), the computing device (11) creates a signature data record (SSr) using said data and transmits the signature data record (SSr) to the external data transmitting device (30) via the output data diode (15), and/or
- the request message (Sa) and/or the data (D) from the external data transmitting device (30) is/are buffered in a further data memory in the input data diode (13) or using a further data memory between the input data diode (13) and the data lock (12) and is/are only then transmitted, in a manner divided into data packets, to the computing device (11) data packet by data packet via the data lock (12), and/or
- the auxiliary computing device (16) makes it possible to receive data at predefined times or in predefined time slots and forwards received data (D) to the computing device (11) via the input data diode (13) and the data lock (12), and/or
- upon receiving data from an external data transmitting device (30), the auxiliary computing device (16) checks whether this device is an authorized data transmitting device (30) and/or whether a response message (Sr) has previously been transmitted to this device, does not forward the data (D) to the computing device (11) in the event of a negative checking result and forwards the received data (D) to the computing device (11) via the input data diode (13) and the data lock (12) in the event of a positive checking result, and/or
- at least one media change, in particular at least one physical media change, a protocol change and/or a transport media change, is carried out in the input data path (100), and/or
- sequences are counted and/or signatures are transmitted in order to detect errors in the transmission of data.

## Revendications

1. Calculateur (10) comprenant un dispositif (11) de calcul, dans lequel
- le calculateur (10) a un chemin (100) de données d'entrée, qui relie unidirectionnellement un dispositif (14) d'interface du calculateur (10) au dispositif (11) de calcul, et une diode (15) de données de sortie, qui relie le dispositif (11) de calcul unidirectionnellement à au moins une interface de sortie du calculateur (10),
**caractérisé en ce que**
- le chemin (100) de données d'entrée a un circuit série, qui est monté en aval du dispositif (14) d'interface et qui comprend une diode (13) de données d'entrée et un sas (12) de données,
- la diode (13) de données d'entrée autorise une transmission de données dans la direction du dispositif (11) de calcul et l'interdit en sens contraire et
- le sas (12) de données a un premier et un deuxième accès (12a, 12b) ainsi qu'une mémoire (121) tampon pour la mise en mémoire tampon de données (D) et est conformé de manière à pouvoir relier la mémoire (121) tampon au choix exclusivement au premier ou au deuxième accès, mais non en même temps aux deux accès.

2. Calculateur (10) suivant la revendication 1,
**caractérisé en ce que**
- le dispositif (14) d'interface est propre à la réception d'un message (Sa) de demande, qui indique le souhait qu'a un dispositif (30) extérieur d'envoi de données de transmettre des données au dispositif (11) de calcul,
- il y a au moins un dispositif (16) auxiliaire de calcul, qui est conformé de manière à permettre, à des instants ou à des fenêtres de temps donnés à l'avance, une réception de données (D) extérieures et de l'interdire en dehors des instants ou des fenêtres de temps donnés à l'avance, et
- la diode (15) de données de sortie relie le dispositif (11) de calcul au au moins un dispositif (16) auxiliaire de calcul et permet une transmission de données en direction du dispositif (16) auxiliaire de calcul et l'interdit en sens contraire.

3. Calculateur (10) suivant l'une des revendications précédentes,
**caractérisé en ce que**
- le dispositif (14) d'interface est conformé de manière à établir, après la réception du message (Sa) de demande, un message (Sa1) de demande modifié contenant la demande et à l'acheminer à la diode (13) de données d'entrée,
- dans lequel le message (Sa1) de demande modifié contient des données d'identification du dispositif (14) d'interface.

4. Calculateur (10) suivant l'une des revendications précédentes,
**caractérisé en ce que**
le dispositif (14) d'interface est conformé de manière
- à exécuter, après la réception du message (Sa) de demande, un contrôle sur le point de savoir si le message (Sa) de demande provient d'un dispositif (30) extérieur d'envoi de données, qui est autorisé à transmettre des données (D), et
- dans le cas d'un message (Sa) de demande provenant d'un dispositif (30) extérieur d'envoi de données autorisé, à envoyer le message (Sa) de demande ou le message (Sa1) de demande modifié à la diode (13) de données d'entrée et, si ce n'est pas le cas, à le négliger.

5. Calculateur (10) suivant l'une des revendications précédentes,
**caractérisé en ce que**
le dispositif (14) d'interface est conformé de manière
- après la réception du message (Sa) de demande, à effectuer un contrôle sur le point de savoir si le message (Sa) de demande contient des instructions de commande ou des modules logiciels pouvant être réalisés et,
- si c'est le cas, à négliger l'acheminent du message (Sa) de demande à la diode (13) de données d'entrée.

6. Calculateur (10) suivant l'une des revendications précédentes,
**caractérisé en ce que**
- le dispositif (11) de calcul est conformé de manière à produire, après la réception du message (Sa) de demande ou du message (Sa1) de demande modifié acheminé par la diode (13) de données d'entrée et le sas (12) de données, un message (Sr) de réponse et à l'envoyer, par la diode (15) de données de sortie, au dispositif (30) extérieur d'envoi de données,
- dans lequel le message (Sr) de réponse indique au moins un instant ou une fenêtre de temps à venir où des données (D) peuvent être envoyées au dispositif (16) auxiliaire de calcul.

7. Calculateur (10) suivant l'une des revendications précédentes,
**caractérisé en ce que**
le message (Sr) de réponse contient une clé publique du dispositif (11) de calcul et/ou une adresse, en particulier une adresse IP, du dispositif (16) auxiliaire de calcul.

8. Calculateur (10) suivant l'une des revendications précédentes,
**caractérisé en ce que**
le dispositif (11) de calcul est conformé de manière à établir, après la réception des données (D) du dispositif (30) extérieur d'envoi de données, avec ceux-ci un ensemble (SSr) de données de signature et à l'envoyer par la diode (15) de données de sortie au dispositif (30) extérieur d'envoi de données.

9. Calculateur (10) suivant l'une des revendications précédentes,
**caractérisé en ce qu'**
il y a une autre mémoire de données dans la diode (13) de données d'entrée ou entre la diode (13) de données d'entrée et le sas (12) de données et le message (Sa) de demande et/ou des données (D) du dispositif (30) extérieur d'envoi de données sont mises en mémoire tampon dans l'autre mémoire de données et ne sont transmises qu'ensuite, réparties sur des paquets de données - paquet de données par paquet de données - par le sas (12) de données au dispositif (11) de calcul.

10. Calculateur (10) suivant l'une des revendications précédentes,
**caractérisé en ce que**
le dispositif (16) auxiliaire de calcul est conformé de manière
- lors ou après la réception de données (D) d'un dispositif (30) extérieur de données à contrôler, si celui-ci est un dispositif (30) extérieur d'envoi de données autorisé et/ou s'il a été envoyé auparavant à celui-ci un message (Sr) de réponse par le dispositif (11) de calcul,
- dans le cas d'un résultat négatif du contrôle, à négliger l'acheminent des données (D) au dispositif (11) de calcul, et
- dans le cas d'un résultat positif du contrôle, à acheminer les données (D) reçues au dispositif (11) de calcul par la diode (13) de données d'entrée et le sas (12) de données.

11. Calculateur (10) suivant l'une des revendications précédentes,
**caractérisé en ce que**
le dispositif (14) d'interface et/ou l'interface de sortie est formé par le dispositif (16) auxiliaire de calcul.

12. Installation de la technique des chemins de fer, en particulier poste d'aiguillage, **caractérisée en ce qu'**elle a un calculateur (10) suivant l'une des revendications précédentes.

13. Procédé pour faire fonctionner un calculateur (10), en particulier un calculateur (10) suivant l'une des revendications précédentes,
dans lequel
- on envoie des données (D) au dispositif (11) de calcul par un chemin (100) de données d'entrée,
- le procédé étant **caractérisé en ce que**
- le chemin (100) de données d'entrée à un circuit série, qui est disposé en aval d'un dispositif (14) d'interface et qui a une diode (13) de données d'entrée et un sas (12) de données,
- dans lequel la diode (13) de données d'entrée autorise une transmission de données dans la direction du dispositif (11) de calcul et l'interdit en sens contraire et
- dans lequel le sas (12) de données a un premier et un deuxième accès (12a, 12b) ainsi qu'une mémoire (121) tampon pour la mise en mémoire tampon de données (D) et est conformé de manière à pouvoir relier la mémoire (121) tampon au choix exclusivement au premier ou au deuxième accès, mais non en même temps aux deux accès.

14. Procédé suivant la revendication 13,
**caractérisé en ce qu'**
- on produit, par le dispositif (11) de calcul, après la réception d'un message (Sa) de demande, un message (Sr) de réponse, qui définit au moins un instant ou une fenêtre de temps à venir, et on envoie le message (Sr) de réponse au dispositif (30) extérieur d'envoi de données par une diode (15) de données de sortie,
- par un dispositif (16) auxiliaire de calcul, on autorise, à l'instant ou à la fenêtre de temps indiqué dans le message (Sr) de réponse, une réception de données du disposition (30) extérieur d'envoi de données et on reçoit les données (D) du dispositif (30) extérieur d'envoi de données et
- on transmet les données (D) reçues au dispositif (11) de calcul par le chemin (100) de données d'entrée.

15. Procédé suivant la revendication 13 ou 14,
**caractérisé en ce que**
- le dispositif (11) de calcul établit, après la réception des données (D) du dispositif (30) extérieur d'envoi de données, avec les données (D), un ensemble (SSr) de données de signature et les envoie au dispositif (30) extérieur d'envoi de données par la diode (15) de données de sortie, et le dispositif (11) de calcul ne tient pour valable ou ne prend en compte les données (D) reçues, que si le dispositif (30) extérieur d'envoi de données envoie en retour, après réception de l'ensemble de données de signature, le message que l'ensemble (SSr) de données de signature confirme une réception correcte de données,
- par le dispositif (14) d'interface, on établit, après la réception du message (Sa) de demande, un message (Sa1) de demande modifié comprenant la demande et on l'achemine à la diode (13) de données d'entrée, dans lequel le message (Sa) de demande modifié comprend des données d'identification du dispositif (14) d'interface, et/ou
- après la réception du message (Sa) de demande, on effectue un contrôle sur le point de savoir si le message (Sa) de demande provient d'un dispositif (30) extérieur d'envoi de données, qui est autorisé à transmettre des données (D), dans le cas d'un message (Sa) de demande d'un dispositif (30) extérieur d'envoi de données autorisé, on envoie le message (Sa) de demande ou le message (Sa1) de demande modifié à la diode (13) de données d'entrée, et sinon on le néglige, et/ou
- après la réception du message (Sa) de demande, on effectue un contrôle sur le point de savoir si le message (Sa) de demande contient des instructions de commande ou des modules de logiciels réalisables, et si c'est le cas, on néglige l'acheminement du message (Sa) de demande à la diode (13) de données d'entrée, et/ou
- le dispositif (11) de calcul produit, après la réception du message (Sa) de demande ou du message (Sa) de demande modifié acheminé par la diode (13) de données d'entrée et le sas (12) de données, un message (Sr) de réponse et l'envoie au dispositif (30) extérieur d'envoi de données par la diode (15) de sortie, dans lequel le message (Sr) de réponse indique indirectement ou directement ou au moins un instant ou une fenêtre de temps à venir, où des données (D) peuvent être envoyées au dispositif (16) de calcul, et/ou
- le message (Sr) de réponse contient une clé publique du dispositif (11) de calcul et/ou une adresse du dispositif (16) auxiliaire de calcul, et/ou
- le dispositif (11) de calcul établit, après la réception des données (D) du dispositif (30) extérieur d'envoi de données, avec celles-ci un ensemble (SSr) de données de signature et envoie l'ensemble (SSr) de données de signature au dispositif (30) extérieur d'envoi de données par la diode (15) de données de sortie, et/ou
- dans une autre mémoire de données dans la diode (13) de données d'entrée ou par une autre mémoire de données entre la diode (13) de données d'entrée et le sas (12) de données, on met en mémoire tampon le message (Sa) de demande et/ou les données (D) du dispositif (30) extérieur d'envoi de données et on les transmet seulement ensuite, réparties sur des paquets de données, paquet de données par paquet de données, au dispositif (11) de calcul par le sas (12) de données, et/ou
- le dispositif (16) auxiliaire de calcul rend possible, aux instants ou fenêtres de temps donnés à l'avance, une réception de données et achemine des données (D) reçues au dispositif (11) de calcul par la diode (13) de données d'entrée et le sas (12) de données, et/ou
- le dispositif (16) auxiliaire de calcul contrôle, à la réception de données d'un dispositif (30) extérieur d'envoi de données, si celui-ci est un dispositif (30) extérieur d'envoi de données autorisé et/ou, s'il lui a été envoyé auparavant un message (Sr) de réponse, dans le cas d'un résultat négatif du contrôle, néglige l'acheminement des données (D) au dispositif (11) de calcul et, dans le cas d'un résultat positif du contrôle, achemine les données (D) reçues au dispositif (11) de calcul par la diode (13) de données d'entrée et le sas (12) de données, et/ou
- dans le chemin (100) de données d'entrée, on effectue au moins un changement de support, en particulier au moins un changement de support physique, un changement de protocole et/ou un changement de milieu de transport, et/ou
- pour la détection d'erreurs à la transmission de données, on compte des séquences et/ou on transmet des signatures.
